# EUROPEAN PATENT SPECIFICATION

(11) **EP 2 975 666 B1**
(45) Date of publication and mention of the grant of the patent: **24.08.2022**
(21) Application number: 15175248.2
(22) Date of filing: 03.07.2015
(51) Int. Cl.: H01M 10/04, H01M 50/103, H01M 50/536, H01M 50/55, H01M 50/178, H01M 50/164, H01M 50/126, H01M 50/116, H01M 50/159, H01M 50/124, H01M 50/119, H01M 50/121, H01M 50/172, H01M 50/531, H01M 50/102, H01M 50/543, H01M 50/557, H01M 10/0585, H01M 10/052, H01M 50/155

(54) **FLEXIBLE SECONDARY BATTERY**
FLEXIBLE SEKUNDÄRBATTERIE
BATTERIE SECONDAIRE FLEXIBLE

(30) Priority: 14.07.2014 KR 20140088452
(43) Date of publication of application: 20.01.2016
(73) Proprietor: Samsung SDI Co., Ltd., Yongin-si, Gyeonggi-do (KR)
(72) Inventor: SUH, Junwon, Gyeonggi-do (KR); YI, Jeong-Doo, Gyeonggi-do (KR); SOHN, Juhee, Gyeonggi-do (KR); SONG, Hyunhwa, Gyeonggi-do (KR)
(74) Representative: Marks & Clerk LLP

(56) References cited:
- EP-A1- 2 894 690
- US-A1- 2003 118 900
- US-A1- 2010 297 494
- US-A1- 2011 311 862
- US-A1- 2012 214 033
- US-A1- 2014 079 979

## Description

### BACKGROUND

### 1. Field

One or more embodiments of the present invention relate to a flexible secondary battery.

### 2. Description of the Related Art

As the electronic technology has developed, the market for various mobile electronic devices such as smart phones, smart pads, e-book readers, flexible tablet computers, or wearable medical devices as well as mobile phones, game players, portable multimedia players (PMPs), or MPEG audio layer-3 (MP3) players has greatly grown.

As the market for mobile electronic devices has grown, the demand for batteries suitable for the mobile electronic devices has also increased. As the demand for flexible mobile electronic devices with improved utility, mobility, storage, and impact resistance has increased, the demand for flexible batteries to be used in the flexible mobile electronic devices has also increased. Document US2010/297494 discloses a flexible secondary battery comprising a casing enclosing an electrode assembly.

### SUMMARY

One or more embodiments of the present invention include a flexible secondary battery of which stability may be maintained even after the flexible secondary battery is repeatedly bent.

Additional aspects will be set forth in part in the description which follows and, in part, will be apparent from the description, or may be learned by practice of the presented embodiments.

According to the present invention, there is provided a flexible secondary battery according to Claim 1.

The first electrode layer may include a first active material unit, the first active material unit formed by coating a first metal current collector with a first active material, and a first non-coated portion on which the first active material is not coated and to which a first electrode tab is attached, and the second electrode layer may include a second active material unit, the second active material unit being formed by coating a second metal current collector with a second active material, and a second non-coated portion on which the second active material is not coated and to which a second electrode tab is attached.

The first electrode tab and the second electrode tab may be pulled to the outside through a space between the gasket and the first sealing sheet or through a space between the gasket and the second sealing sheet.

Insulating films may be attached to outer surfaces of the first electrode tab and the second electrode tab that overlap the gasket.

The gasket may include a first lead electrode and a second lead electrode that pass through one side of the gasket.

The first lead electrode may be adhered to the first electrode tab and the second lead electrode may be adhered to the second electrode tab in an internal space of the gasket.

The electrode assembly may further include a fixing member that fixes one end portion of each of the first electrode layer, the separator, and the second electrode layer.

The fixing member is not former on another end portion of each of the first electrode layer, the separator, and the second electrode such that the other end portion may undergo a greater displacement than the one end portion of each of the first electrode layer, the separator, and the second electrode layer on which the fixing member is formed.

The fixing member that is disposed between the first non-coated portion and the separator and between the separator and the second non-coated portion may be an adhesive or an adhesive tape.

The flexible secondary battery may further include a protective layer that is formed on an outer surface of the electrode assembly, wherein a bending stiffness of the protective layer is greater than an average bending stiffness of the first electrode layer, the separator, and the second electrode layer.

### BRIEF DESCRIPTION OF THE DRAWINGS

These and/or other aspects will become apparent and more readily appreciated from the following description of the embodiments, taken in conjunction with the accompanying drawings in which:
FIG. 1 is an exploded perspective view illustrating a flexible secondary battery according to an embodiment of the present invention;
FIG. 2 is a plan view illustrating an electrode assembly of the flexible secondary battery of FIG. 1;
FIG. 3 is a cross-sectional view taken along line I-I of FIG. 2;
FIG. 4 is an exploded perspective view illustrating a flexible secondary battery that is a modification of the flexible secondary battery of FIG. 1; and
FIG. 5 is a plan view illustrating a gasket of the flexible secondary battery of FIG. 4.

### DETAILED DESCRIPTION

The present invention may include various embodiments that will be illustrated in the drawings and will be described herein in detail. The effects and features of the present invention and the accompanying methods thereof will become apparent from the following description of the embodiments, taken in conjunction with the accompanying drawings.

Reference will now be made in detail to embodiments, examples of which are illustrated in the accompanying drawings. In the drawings, the same elements are denoted by the same reference numerals, and a repeated explanation thereof will not be given.

It will be understood that although the terms "first", "second", etc. may be used herein to describe various elements, these elements should not be limited by these terms. These elements are only used to distinguish one element from another.

As used herein, the singular forms "a," "an" and "the" are intended to include the plural forms as well, unless the context clearly indicates otherwise.

It will be further understood that the terms "comprises" and/or "comprising" used herein specify the presence of stated features or components, but do not preclude the presence or addition of one or more other features or components.

It will be understood that when an element is referred to as being "formed on," another element, it can be directly or indirectly formed on the other element. That is, for example, intervening elements may be present.

Sizes of elements may be exaggerated for convenience of explanation. In other words, since sizes and thicknesses of elements in the drawings are arbitrarily illustrated for convenience of explanation, the following embodiments are not limited thereto.

As used herein, the term "and/or" includes any and all combinations of one or more of the associated listed items. Expressions such as "at least one of," when preceding a list of elements, modify the entire list of elements and do not modify the individual elements of the list.

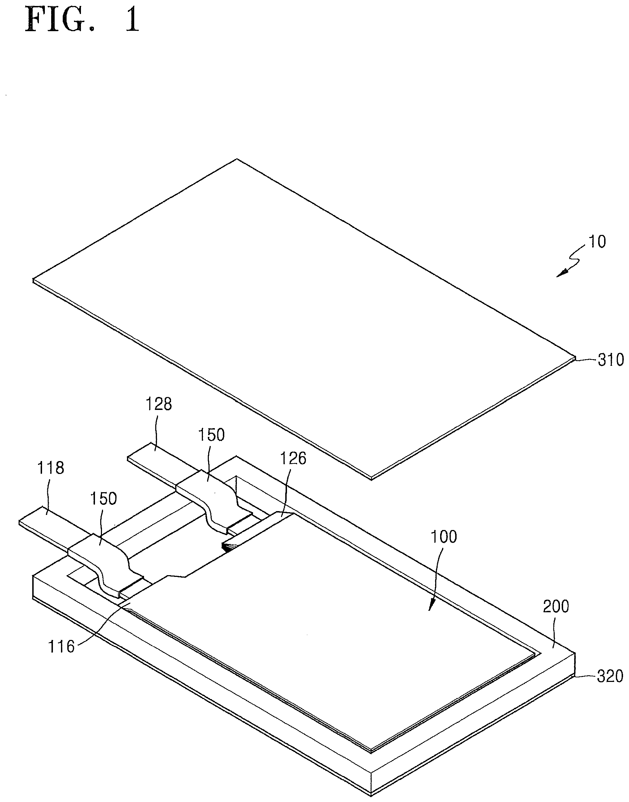

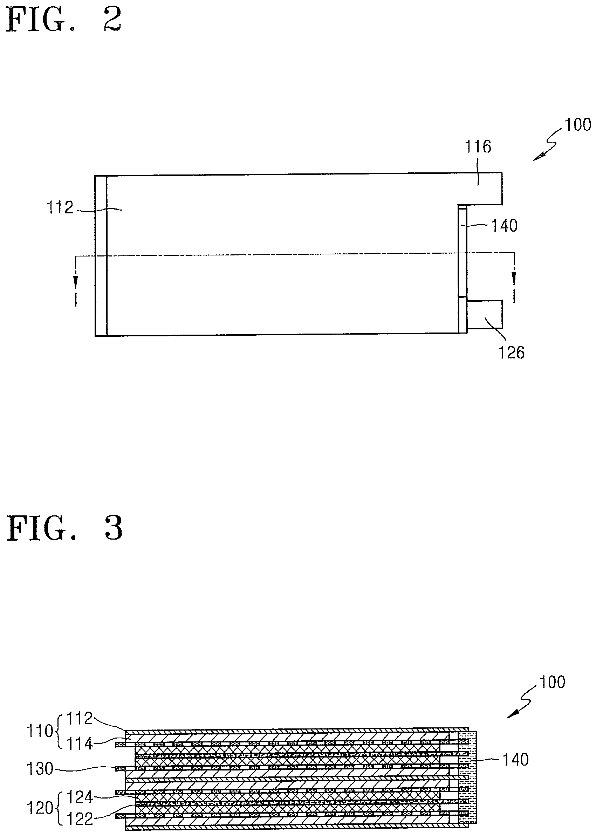

FIG. 1 is an exploded perspective view illustrating a flexible secondary battery 10 according to an embodiment of the present invention. FIG. 2 is a plan view illustrating an electrode assembly 100 of the flexible secondary battery 10 of FIG. 1. FIG. 3 is a cross-sectional view taken along line I-I of FIG. 2.

Referring to FIGS. 1 through 3, the flexible secondary battery 10 includes the electrode assembly 100, a gasket 200 that surrounds an edge of the electrode assembly 100, a first sealing sheet 310 that is attached to a first surface of the gasket 200, and a second sealing sheet 320 that is attached to a second surface of the gasket 200 opposite the first surface.

The electrode assembly 100 includes a first electrode layer 110, a second electrode layer 120, and a separator 130 that is disposed between the first electrode layer 110 and the second electrode layer 120. For example, the electrode assembly 100 may have a structure in which a plurality of the first electrode layers 110, a plurality of the separators 130, and a plurality of the second electrode layers 120 are repeatedly stacked.

The first electrode layer 110 may be any one of a positive film and a negative film. When the first electrode layer 110 is a positive film, the second electrode layer 120 may be a negative film, and when the first electrode layer 110 is a negative film, the second electrode layer 120 may be a positive film.

The first electrode layer 110 includes a first metal current collector 112, a first active material unit 114 that is formed by coating a surface of the first metal current collector 112 with a first active material, and a first non-coated portion 116 on which the first active material is not coated. Likewise, the second electrode layer 120 includes a second metal current collector 122, a second active material unit 124 that is formed by coating a surface of the second metal current collector 122 with a second active material, and a second non-coated portion 126 on which the second active material is not coated.

When the first electrode layer 110 is a positive film, the first metal current collector 112 is a positive current collector and the first active material unit 114 is a positive active material unit. When the second electrode layer 120 is a negative film, the second metal current collector 122 is a negative current collector and the second active material unit 124 is a negative active material unit.

The positive current collector may be formed of aluminum, stainless steel, titanium, silver, or a combination thereof. The positive active material unit includes a positive active material, a binder, and a conductive material.

The positive active material is a material that reversibly occludes and releases lithium ions. For example, the positive active material may include at least one selected from the group consisting of a lithium transition metal oxide such as lithium cobalt oxide, lithium nickel oxide, lithium nickel cobalt oxide, lithium nickel cobalt aluminum oxide, lithium nickel cobalt manganese oxide, lithium manganese oxide, or lithium iron phosphate, nickel sulfide, copper sulfide, sulfur, iron oxide, and vanadium oxide.

The binder may include at least one selected from the group consisting of a polyvinylidene fluoride-based binder such as polyvinylidene fluoride, vinylidene fluoride/hexafluoropropylene copolymer, or vinylidene fluoride/tetrafluoroethylene copolymer, a carboxymethyl cellulose-based binder such as sodium-carboxymethyl cellulose or lithium-carboxymethyl cellulose, an acrylate-based binder such as polyacrylic acid, lithium-polyacrylic acid, acryl, polyacrylonitrile, polymethyl methacrylate, or polybutyl acrylate, polyamideimide, polytetrafluoroethylene, polyethylene oxide, polypyrrole, lithium-nafion, and a styrene butadiene rubber-based polymer.

The conductive material may include at least one selected from the group consisting of a carbon-based conductive material such as carbon black, carbon fiber, or graphite, a conductive fiber such as a metal fiber, metal powder such as carbon fluoride powder, aluminum powder, or nickel powder, a conductive whisker such as zinc oxide or potassium titanate, a conductive metal oxide such as titanium oxide, and a conductive polymer such as a polyphenylene derivative.

The negative current collector may include at least one metal selected from the group consisting of copper, stainless steel, nickel, and titanium. The negative active material unit includes a negative active material, a binder, and a conductive material.

The negative active material includes a material that forms an alloy with lithium, or reversibly occludes or releases lithium. For example, the negative active material may include at least one selected from the group consisting of a metal, a carbon-based material, a metal oxide, and a lithium metal nitride.

The metal may include at least one selected from the group consisting of lithium, silicon, magnesium, calcium, aluminum, germanium, tin, lead, arsenic, antimony, bismuth, silver, gold, zinc, cadmium, mercury, copper, iron, nickel, cobalt, and indium.

The carbon-based material may include at least one selected from the group consisting of graphite, graphite carbon fiber, coke, mesocarbon microbeads (MCMB), polyacene, pitch-based carbon fiber, and hard carbon.

The metal oxide may include at least one selected from the group consisting of lithium titanium oxide, titanium oxide, molybdenum oxide, niobium oxide, iron oxide, tungsten oxide, tin oxide, amorphous tin mixed oxide, silicon monoxide, cobalt oxide, and nickel oxide.

The binder and the conductive material may be the same as those included in the positive active material unit.

The separator 130 may be formed by, but is not limited to, coating at least one material selected from the group consisting of polyethylene (PE), polystyrene (PS), polypropylene (PP), and a co-polymer of PE and PP with polyvinylidene fluoride cohexafluoropropylene (PVDF-HFP) co-polymer.

A first electrode tab 118 and a second electrode tab 128 are attached to the electrode assembly 110. In detail, the first electrode tab 118 and the second electrode tab 128 are respectively attached by using welding or the like to a plurality of the first non-coated portions 116 and a plurality of the second non-coated portions 126 that are stacked.

The electrode assembly 100 further includes a fixing member 140 that fixes one end portion of each of the first electrode layer 110, the separator 130, and the second electrode layer 120. The fixing member 140 that is disposed between the first non-coated portion 116 and the separator 130 and between the separator 130 and the second non-coated portion 126 may be, but is not limited to, an adhesive or an adhesive tape.

The fixing member 140 fixes only the one end portion of each of the first electrode layer 110, the separator 130, and the second electrode layer 120. Accordingly, in an area where the fixing member 140 is not formed, the electrode assembly 100 may bend due to slippage between the first electrode 110, the separator 130, and the second electrode layer 120, and relative positions of the first electrode layer 110, the separator 130, and the second electrode layer 120 may be maintained due to the fixing member 140 even when the electrode assembly 100 repeatedly bends.

The fixing member 140 may be formed on the same side of the electrode assembly 100 as the first electrode tab 118 and the second electrode tab 128 in a longitudinal direction of the electrode assembly 100.

The other end portion of each of the first electrode 110, the separator 130, and the second electrode layer 120 on which the fixing member 140 is not formed undergoes a greater displacement than the one end portion of each of the first electrode layer 110, the separator 130, and the second electrode layer 120 on which the fixing member 140 is formed when the electrode assembly 100 is bent. Since the first electrode tab 118 is adhered to the plurality of first non-coated portions 116 and the second electrode tab 128 is adhered to the plurality of second non-coated portions 126, the first electrode tab 118 and the second electrode tab 128 can be actually respectively used as fixing units for fixing the first electrode layers 110 and the second electrode layers 120.

Accordingly, assuming that the fixing member 140 is formed on the opposite side of the electrode assembly 110 to the first electrode tab 118 and the second electrode tab 128 in the longitudinal direction of the electrode assembly 100, when the electrode assembly 100 is bent, the first electrode layer 110 and/or the second electrode layer 120 may bend between the first and second electrode taps 118 and 128 and the fixing member 140 and a part of the fixing member 140 may be destroyed, thereby making it difficult to maintain an alignment of the first electrode layer 110, the separator 130, and the second electrode layer 120.

A protective layer (not shown) may be formed on an outermost surface of the electrode assembly 100. The protective layer prevents the first electrode layer 110, the separator 130, or the second electrode layer 120 from wrinkling when the electrode assembly 100 is bent. That is, when the electrode assembly 100 is bent, the first electrode layer 110, the separator 130, and the second electrode layer 120 tend to wrinkle in order to reduce a compressive stress. When the first electrode layer 110, the separator 130, or the second electrode layer 120 is about to undergo a deformation with a small radius of curvature, such as a wrinkle, the protective layer prevents a greater deformation by pressing down the first electrode layer 110, the separator 130, or the second electrode 120 and may reduce a stress applied to the first electrode 110, the separator 130, or the second electrode layer 120.

As such, in order for the protective layer to prevent the first electrode layer 110, the separator 130, or the second electrode layer 120 from wrinkling, a bending stiffness of the protective layer is greater than an average bending stiffness of the first electrode layer 110, the separator 130, and the second electrode layer 120. For example, a bending stiffness of the protective layer may be about 1.5 times greater than an average bending stiffness of the first electrode layer 110, the separator 130, and the second electrode layer 120.

Also, the protective layer is formed of a material that has not only a predetermined stiffness but also a predetermined flexibility in order not to affect the bending of the electrode assembly 100. For example, the protective layer may be formed as, but is not limited to, a polymer film, a film including a laminated polymer film layer, a metal foil, or a composite film including carbon. For example, the protective layer may have a thickness ranging from about 15 micrometers to about 1 millimeter, and a tensile modulus of elasticity of the protective layer may range from about 0.5 GPa to about 300 GPa.

The gasket 200 surrounds the edge of the electrode assembly 100, and the first sealing sheet 310 is attached to the first surface of the gasket 200 and the second sealing sheet 320 is attached to the second surface of the gasket 200 that is opposite to the first surface. The first sealing sheet 310 and the second sealing sheet 320 seal the electrode assembly 100 with the help of the gasket 200.

The gasket 200 has an internal space whose central portion is open and in which the electrode assembly 100 is located. The gasket 200 is flexible. When the gasket 200 is flexible, the gasket 200 bends along with the electrode assembly 100 when the electrode assembly 100 bends, and thus distributes a stress that may concentrate on the electrode assembly 100 when the flexible secondary battery 10 is bent, thereby preventing damage to the electrode assembly 100. Also, the gasket 200 is formed of a single flexible material. Accordingly, the gasket 200 does not have portions having different moduli of elasticity, thereby more effectively distributing a stress during bending.

Each of the first sealing sheet 310 and the second sealing sheet 320 may include a first insulating layer, a metal layer, and a second insulating layer that are sequentially stacked. Each of the first insulating layer and the second insulating layer may be formed of PP, polyethyleneterephthalate (PET), or nylon, and the metal layer may be formed of, but is not limited to, aluminum, steel, or stainless steel.

For example, each of the first sealing sheet 310 and the second sealing sheet 320 may have a three-layer structure including the first insulating layer formed of PP, the metal layer formed of aluminum, and the second insulating layer formed of PET, wherein the first insulating layer of each of the first sealing sheet 310 and the second sealing sheet 320 is disposed to contact the gasket 200.

The first insulating layer may be attached by using thermal bonding to the gasket 200. In this case, in order to improve a thermal bonding efficiency and increase a bonding force between the first insulating layer and the gasket 200, a difference between a melting point of a material of the gasket 200 and a melting point of a material of the first insulating layer is equal to or less than 50°C. For example, the gasket 200 and the first insulating layer may be formed of the same material.

The gasket 200 is formed to have a thickness ranging from about 80% to about 120% of a thickness of the electrode assembly 100, thereby preventing a bent portion from being formed in the first sealing sheet 310 and the second sealing sheet 320.

If the bent portion is formed in the first sealing sheet 310 and the second sealing sheet 320, a stress may concentrate on the bent portion that is formed in the first sealing sheet 310 and the second sealing sheet 320 when the flexible secondary battery 10 bends, thereby resulting in damage (e.g., tear) to the first sealing sheet 310 and the second sealing sheet 320.

However, according to the present embodiment, since the gasket 200 is formed to have a thickness ranging from about 80% to about 120% of that of the electrode assembly 100, a stress may be uniformly distributed without concentrating on a specific portion of the first sealing sheet 310 and the second sealing sheet 320 when the flexible secondary battery 10 is bent, thereby improving the stability of the flexible secondary battery 10.

A method of manufacturing the flexible secondary battery 10 will now be briefly explained.

First, the second sealing sheet 320 is attached to the second surface of the gasket 200. The second sealing sheet 320 is attached to the second surface of the gasket 200 such that the first insulating layer faces the gasket 200 and then the gasket 200 and the first insulating layer are thermally bonded to each other.

Next, the electrode assembly 100 is disposed in the internal space of the gasket 200, and then the first sealing sheet 310 is attached to the first surface of the gasket 200. A method of attaching the first sealing sheet 310 is the same as a method of attaching the second sealing sheet 320.

The first electrode tab 118 and the second electrode tab 128 of the electrode assembly 100 are pulled to the outside through a space between the gasket 200 and the first sealing sheet 310. Also, in order to increase a bonding force between the gasket 200 and the second sealing sheet 310 and to prevent a shortcircuit between the first electrode tab 118 and the second electrode tab 128, insulating films 150 are attached to outer surfaces of the first electrode tab 118 and the second electrode tab 128 that overlap the gasket 200.

Although the second sealing sheet 320 is first attached to the gasket 200 and then the first sealing sheet 310 is attached, the present embodiment is not limited thereto and the first sealing sheet 310 may be first attached, or the electrode assembly 100 may be disposed in the gasket 200 and then the first sealing sheet 310 and the second sealing sheet 320 may be simultaneously or sequentially attached to the gasket 200.

As such, since a space in secured in the flexible secondary battery 10 of the present embodiment in which the electrode assembly 100 is received by using the gasket 200, a drawing work for forming a space in which the electrode assembly 100 is received in a pouch may be omitted.

Also, in the conventional art, as a thickness of the electrode assembly 100 increases, a drawing work depth increases to correspond to the thickness of the electrode assembly 100, thereby increasing the risk of a crack in the pouch. In the flexible secondary battery 10 of the present embodiment, however, since a thickness of the gasket 200 is freely determined according to a thickness of the electrode assembly 100, the flexible secondary battery 10 having a large capacity may be easily manufactured.

In addition, since the gasket 200 is formed of a flexible material and bends long with the electrode assembly 100, a stress that is generated when the flexible secondary battery 10 is bent may be uniformly distributed, thereby maintaining the stability and reliability of the flexible secondary battery 10.

Table 1 shows a result obtained after the flexible secondary battery 10 including the gasket 200 according to Embodiment and a flexible secondary battery not including the gasket 200 according to Comparative Example is repeatedly bent 1000 times and 2000 times to have a curvature radius of 25 mm and then capacity retention rates of the flexible secondary battery 10 of Embodiment and the flexible secondary battery of Comparative Example are compared with each other. Comparative Example corresponds to a case where a receiving portion in which the electrode assembly 100 may be received is formed in a pouch by using a drawing work and then the pouch outside the receiving portion is sealed by using thermal bonding.

**Table 1**

| +Bending Cycles | 0 | 1000 | 2000 |
|---|---|---|---|
| Comparative Example | 100% | 75.4% | 23.6% |
| Embodiment | 100% | 95.6% | 90.3% |

As shown in Table 1, in Comparative Example, a capacity retention rate after 1000 bending cycles is reduced to 75.4% and is greatly reduced to 23.6% after 2000 bending cycles. In contrast, in the Embodiment, a capacity retention rate is equal to or greater than 90% even after 2000 bending cycles. This is because the gasket 200 bends along with the flexible secondary battery 10 when the flexible secondary battery 10 is bent and thus a stress may be uniformly distributed, thereby preventing damage to the electrode assembly 100.

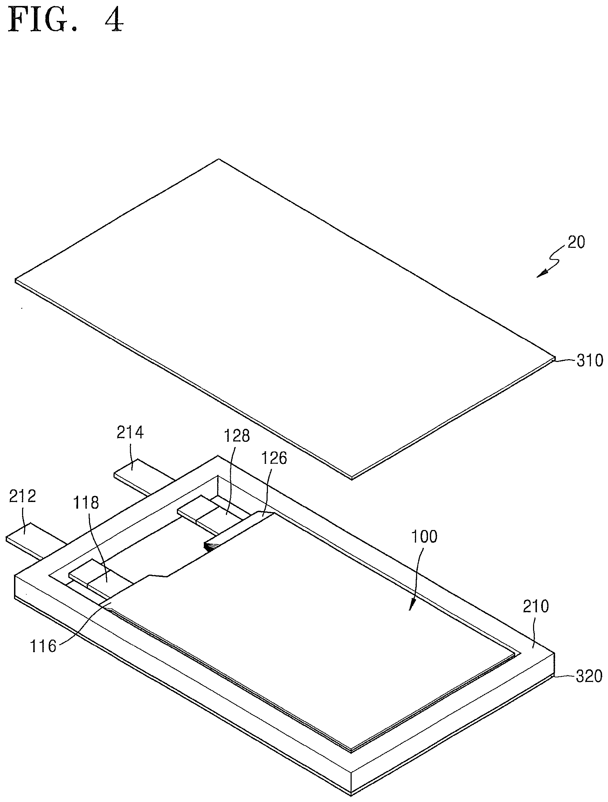

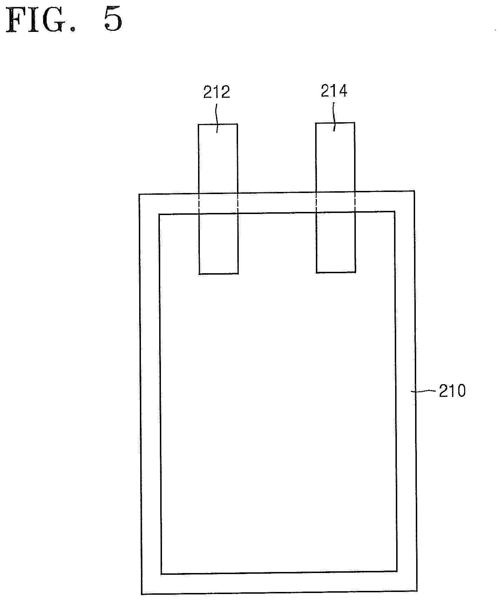

FIG. 4 is an exploded perspective view illustrating a flexible secondary battery 20 that is a modification of the flexible secondary battery 10 of FIG. 1. FIG. 5 is a plan view illustrating a gasket 210 of the flexible secondary battery 20 of FIG. 4.

Referring to FIGS. 4 and 5, the flexible secondary battery 20 includes the electrode assembly 100, the gasket 210 that surrounds an edge of the electrode assembly 100, the first sealing sheet 310 that is attached to a first surface of the gasket 210, and the second sealing sheet 320 that is attached to a second surface of the gasket 210 opposite the first surface.

The electrode assembly 100, the first sealing sheet 310, and the second sealing sheet 320 are the same as those of FIGS. 1 through 3, and thus, repeated explanations thereof will not be given.

The gasket 210 surrounds the edge of the electrode assembly 100 and is formed of a flexible material. Accordingly, the gasket 210 bends along with the electrode assembly 100 when the flexible secondary battery 20 is bent, and thus may uniformly distribute a stress, thereby effectively preventing damage to the electrode assembly 100.

The gasket 210 includes a first lead electrode 212 and a second lead electrode 214 that pass through one side of the gasket 210. The first lead electrode 212 and the second lead electrode 214 are integrally formed with the gasket 210 by using insert molding.

The first lead electrode 212 is adhered to the first electrode tab 118 in an internal space of the gasket 210, and the second lead electrode 214 is adhered to the second electrode tab 128 in the internal space of the gasket 210. The first electrode tab 118 is adhered to the first non-coated portion 116 and the second electrode tab 128 is adhered to the second non-coated portion 126.

As such, when the first electrode tab 118 and the second electrode tab 128 are respectively connected to the first lead electrode 212 and the second lead electrode 214, the first electrode tab 118 and the second electrode tab 128 are connected to the outside without bending, thereby preventing damage to the first electrode tab 118 and the second electrode tab 128. Also, since the first electrode tab 118 and the second electrode tab 128 are not disposed between the gasket 210 and the first sealing sheet 310 or the second sealing sheet 320, a bonding force between the gasket 210 and the first sealing sheet 310 or the second sealing sheet 320 may be increased.

A method of manufacturing the flexible secondary battery 20 is quite the same as the method of manufacturing the flexible secondary battery 10 described with reference to FIGS. 1 through 3. However, when the electrode assembly 100 is disposed in the internal space of the gasket 210, the first electrode tab 118 and the second electrode tab 128 are respectively attached to the first lead electrode 212 and the second lead electrode 214 by using welding or the like.

As described above, according to the one or more of the above embodiments of the present invention, the stability and reliability of a flexible secondary battery may be maintained even after the flexible secondary battery is repeatedly bent.

Other unmentioned effects of the present invention will be apparent to one of ordinary skill in the art from the above description.

While the present invention has been particularly shown and described with reference to exemplary embodiments thereof using specific terms, the embodiments and terms have been used to explain the present invention and should not be construed as limiting the scope of the present invention defined by the claims. Accordingly, it will be understood by those of ordinary skill in the art that various changes in form and details may be made therein without departing from the scope of the present invention as defined by the following claims.

## Claims

1. A flexible secondary battery comprising:
an electrode assembly (100) that comprises a first electrode layer (110), a second electrode layer (120), and a separator (130) that is disposed between the first electrode layer and the second electrode layer;
a gasket (200) that is flexible and surrounds all edges of the electrode assembly (100);
a first sealing sheet (310) that is attached to a first surface of the gasket (200); and
a second sealing sheet (320) that is attached to a second surface of the gasket opposite the first surface,
wherein each of the first sealing sheet (310) and the second sealing sheet (320) comprises a first insulating layer, a metal layer, and a second insulating layer,
wherein the gasket (200) is formed of a single material, and
wherein the gasket (200) and the first insulating layer are formed of the same material,
wherein the gasket (200) is configured to seal the electrode assembly (100) along with the first sealing sheet (310) and the second sealing sheet (320), and
wherein the first sealing sheet (310) and the second sealing sheet (320) are separate from each other.

2. The flexible secondary battery of claim 1, wherein a thickness of the gasket (200) ranges from 80% to 120% of a thickness of the electrode assembly (100).

3. The flexible secondary battery of claim 1 or 2, wherein the first electrode layer (110) comprises a first active material unit, the first active material unit formed as a coating of a first active material (114) on a first metal current collector (112) , and a first non-coated portion (116) on which the first active material is not coated and to which a first electrode tab (118) is attached, and
the second electrode layer (120) comprises a second active material unit, the second active material unit being formed as a coating of a second active material (124) on a second metal current collector (122), and a second non-coated portion (126) on which the second active material is not coated and to which a second electrode tab (128) is attached.

4. The flexible secondary battery of claim 3, wherein the first electrode tab (118) and the second electrode tab (128) are pulled to the outside through a space between the gasket (200) and the first sealing sheet (310) or through a space between the gasket (200) and the second sealing sheet (320).

5. The flexible secondary battery of claim 4, wherein insulating films (150) are attached to outer surfaces of the first electrode tab (118) and the second electrode tab (128) that overlap the gasket (200).

6. The flexible secondary battery of claim 3, wherein the gasket (200) comprises a first lead electrode (212) and a second lead electrode (214) that pass through one side of the gasket (200).

7. The flexible secondary battery of claim 6, wherein the first lead electrode (212) is adhered to the first electrode tab (118) and the second lead electrode (214) is adhered to the second electrode tab (128) in an internal space of the gasket (200).

8. The flexible secondary battery of any one of the preceding claims, wherein the electrode assembly (100) further comprises a fixing member (140) that fixes one end portion of each of the first electrode layer (110), the separator (130), and the second electrode layer (120).

9. The flexible secondary battery of claim 8, wherein the fixing member is not formed on another end portion of each of the first electrode layer (110), the separator (130), and the second electrode layer (120) such that the other end portion is configured to undergo a greater displacement than the one end portion of each of the first electrode layer (110), the separator (130), and the second electrode layer (120) on which the fixing member (140) is formed.

10. The flexible secondary battery of claim 8 or 9, wherein the fixing member (140) is disposed between the first non-coated portion (116) and the separator (130) and between the separator (130) and the second non-coated portion (126), and the fixing member (140) is an adhesive or an adhesive tape.

11. The flexible secondary battery of any one of the preceding claims, further comprising a protective layer that is formed on an outer surface of the electrode assembly (100),
wherein a bending stiffness of the protective layer is greater than an average bending stiffness of the first electrode layer (110), the separator (130), and the second electrode layer (120).

## Patentansprüche

1. Flexible Sekundärzelle, umfassend:
eine Elektrodenbaugruppe (100), die eine erste Elektrodenschicht (110), eine zweite Elektrodenschicht (120) und einen Separator (130) umfasst, der zwischen der ersten Elektrodenschicht und der zweiten Elektrodenschicht angeordnet ist;
eine Dichtung (200), die flexibel ist und alle Kanten der Elektrodenbaugruppe (100) umgibt;
eine erste Dichtungslage (310), die an einer ersten Oberfläche der Dichtung (200) angebracht ist; und
eine zweite Dichtungslage (320), die an einer zweiten Oberfläche der Dichtung entgegengesetzt zur ersten Oberfläche angebracht ist,
wobei jede der ersten Dichtungslage (310) und der zweiten Dichtungslage (320) eine erste Isolierschicht, eine Metallschicht und eine zweite Isolierschicht umfasst,
wobei die Dichtung (200) aus einem einzigen Material gebildet ist, und
wobei die Dichtung (200) und die erste Isolierschicht aus dem gleichen Material gebildet sind,
wobei die Dichtung (200) dafür konfiguriert ist, die Elektrodenbaugruppe (100) zusammen mit der ersten Dichtungslage (310) und der zweiten Dichtungslage (320) abzudichten, und
wobei die erste Dichtungslage (310) und die zweite Dichtungslage (320) voneinander getrennt sind.

2. Flexible Sekundärzelle nach Anspruch 1, wobei eine Dicke der Dichtung (200) von 80 % bis 120 % einer Dicke der Elektrodenbaugruppe (100) reicht.

3. Flexible Sekundärzelle nach Anspruch 1 oder 2, wobei die erste Elektrodenschicht (110) eine erste Einheit aus aktivem Material, wobei die erste Einheit aus aktivem Material als eine Beschichtung eines ersten aktiven Materials (114) auf einem ersten Metallstromabnehmer (112) gebildet ist, und einen ersten unbeschichteten Abschnitt (116) umfasst, auf dem das erste aktive Material nicht beschichtet ist und an dem eine erste Elektrodenlasche (118) angebracht ist, und
die zweite Elektrodenschicht (120) eine zweite Einheit aus aktivem Material, wobei die zweite Einheit aus aktivem Material als eine Beschichtung eines zweiten aktiven Materials (124) auf einem zweiten Metallstromabnehmer (122) gebildet ist, und einen zweiten unbeschichteten Abschnitt (126) umfasst, auf dem das zweite aktive Material nicht beschichtet ist und an dem eine zweite Elektrodenlasche (128) angebracht ist.

4. Flexible Sekundärzelle nach Anspruch 3, wobei die erste Elektrodenlasche (118) und die zweite Elektrodenlasche (128) durch einen Zwischenraum zwischen der Dichtung (200) und der ersten Dichtungslage (310) oder durch einen Zwischenraum zwischen der Dichtung (200) und der zweiten Dichtungslage (320) nach außen gezogen sind.

5. Flexible Sekundärzelle nach Anspruch 4, wobei Isolierfilme (150) an Außenflächen der ersten Elektrodenlasche (118) und der zweiten Elektrodenlasche (128) angebracht sind, die die Dichtung (200) überlappen.

6. Flexible Sekundärzelle nach Anspruch 3, wobei die Dichtung (200) eine erste Bleielektrode (212) und eine zweite Bleielektrode (214) umfasst, die durch eine Seite der Dichtung (200) hindurchgehen.

7. Flexible Sekundärzelle nach Anspruch 6, wobei die erste Bleielektrode (212) an der ersten Elektrodenlasche (118) haftet und die zweite Bleielektrode (214) an der zweiten Elektrodenlasche (128) in einem Innenraum der Dichtung (200) haftet.

8. Flexible Sekundärzelle nach einem der vorhergehenden Ansprüche, wobei die Elektrodenbaugruppe (100) ferner ein Befestigungselement (140) umfasst, das einen Endabschnitt von jedem Element aus der ersten Elektrodenschicht (110), dem Separator (130) und der zweiten Elektrodenschicht (120) befestigt.

9. Flexible Sekundärzelle nach Anspruch 8, wobei das Befestigungselement nicht auf einem anderen Endabschnitt von jedem Element aus der ersten Elektrodenschicht (110), dem Separator (130) und der zweiten Elektrodenschicht (120) gebildet ist, so dass der andere Endabschnitt dafür konfiguriert ist, einer größeren Verschiebung unterzogen zu werden als der eine Endabschnitt von jedem Element aus der ersten Elektrodenschicht (110), dem Separator (130) und der zweiten Elektrodenschicht (120), auf dem das Befestigungselement (140) gebildet ist.

10. Flexible Sekundärzelle nach Anspruch 8 oder 9, wobei das Befestigungselement (140) zwischen dem ersten unbeschichteten Abschnitt (116) und dem Separator (130) und zwischen dem Separator (130) und dem zweiten unbeschichteten Abschnitt (126) angeordnet ist und das Befestigungselement (140) ein Klebstoff oder ein Klebeband ist.

11. Flexible Sekundärzelle nach einem der vorhergehenden Ansprüche, ferner umfassend eine Schutzschicht, die auf einer Außenfläche der Elektrodenbaugruppe (100) gebildet ist,
wobei eine Biegesteifigkeit der Schutzschicht größer als eine durchschnittliche Biegesteifigkeit der ersten Elektrodenschicht (110), des Separators (130) und der zweiten Elektrodenschicht (120) ist.

## Revendications

1. Batterie secondaire flexible, comprenant :
un ensemble d'électrodes (100) qui comprend une première couche d'électrode (110), une seconde couche d'électrode (120), et un séparateur (130) qui est disposé entre la première couche d'électrode et la seconde couche d'électrode ;
un joint (200) qui est flexible et entoure tous les bords de l'ensemble d'électrodes (100) ;
une première feuille d'étanchéité (310) qui est fixée à une première surface du joint (200) ; et
une seconde feuille d'étanchéité (320) qui est fixée à une seconde surface du joint opposée à la première surface ;
dans laquelle chacune de la première feuille d'étanchéité (310) et de la seconde feuille d'étanchéité (320) comprend une première couche isolante, une couche métallique et une seconde couche isolante ;
dans laquelle le joint (200) est formé en un matériau unique ; et
dans laquelle le joint (200) et la première couche isolante sont formés dans le même matériau ;
dans laquelle le joint (200) est configuré pour sceller l'ensemble d'électrodes (100) avec la première feuille d'étanchéité (310) et la seconde feuille d'étanchéité (320) ; et
dans laquelle la première feuille d'étanchéité (310) et la seconde feuille d'étanchéité (320) sont séparées l'une de l'autre.

2. Batterie secondaire flexible selon la revendication 1, dans laquelle une épaisseur du joint (200) est comprise entre 80 % et 120 % d'une épaisseur de l'ensemble d'électrodes (100).

3. Batterie secondaire flexible selon la revendication 1 ou 2, dans laquelle la première couche d'électrode (110) comprend une première unité de matériau actif, la première unité de matériau actif étant formée comme un revêtement d'un premier matériau actif (114) sur un premier collecteur de courant métallique (112), et une première partie non-revêtue (116) sur laquelle le premier matériau actif n'est pas revêtu et à laquelle une première languette d'électrode (118) est fixée ; et
la seconde couche d'électrode (120) comprend une seconde unité de matériau actif, la seconde unité de matériau actif étant formée comme un revêtement d'un second matériau actif (124) sur un second collecteur de courant métallique (122), et une seconde partie non-revêtue (126) sur laquelle le second matériau actif n'est pas revêtu et à laquelle une seconde languette d'électrode (128) est fixée.

4. Batterie secondaire flexible selon la revendication 3, dans laquelle la première languette d'électrode (118) et la seconde languette d'électrode (128) sont tirées vers l'extérieur à travers un espace entre le joint (200) et la première feuille d'étanchéité (310) ou à travers un espace entre le joint (200) et la seconde feuille d'étanchéité (320).

5. Batterie secondaire flexible selon la revendication 4, dans laquelle des films isolants (150) sont fixés à des surfaces extérieures de la première languette d'électrode (118) et de la seconde languette d'électrode (128) qui recouvrent le joint (200).

6. Batterie secondaire flexible selon la revendication 3, dans laquelle le joint (200) comprend une première électrode au plomb (212) et une seconde électrode au plomb (214) qui passent à travers un côté du joint (200).

7. Batterie secondaire flexible selon la revendication 6, dans laquelle la première électrode au plomb (212) adhère à la première languette d'électrode (118) et la seconde électrode au plomb (214) adhère à la seconde languette d'électrode (128) dans un espace interne du joint (200).

8. Batterie secondaire flexible selon l'une quelconque des revendications précédentes, dans laquelle l'ensemble d'électrodes (100) comprend en outre un élément de fixation (140) qui fixe une partie d'extrémité de chaque élément parmi la première couche d'électrode (110), le séparateur (130), et la seconde couche d'électrode (120).

9. Batterie secondaire flexible selon la revendication 8, dans laquelle l'élément de fixation n'est pas formé sur une autre partie d'extrémité de chaque élément parmi la première couche d'électrode (110), le séparateur (130), et la seconde couche d'électrode (120), de sorte que l'autre partie d'extrémité est configurée pour subir un déplacement supérieur à la première partie d'extrémité de chaque élément parmi la première couche d'électrode (110), le séparateur (130), et la seconde couche d'électrode (120) sur laquelle l'élément de fixation (140) est formé.

10. Batterie secondaire flexible selon la revendication 8 ou 9, dans laquelle l'élément de fixation (140) est disposé entre la première partie non-revêtue (116) et le séparateur (130) et entre le séparateur (130) et la seconde partie non-revêtue (126), et l'élément de fixation (140) est un autocollant ou une bande adhésive.

11. Batterie secondaire flexible selon l'une quelconque des revendications précédentes, comprenant en outre une couche de protection qui est formée sur une surface extérieure de l'ensemble d'électrodes (100) ;
dans laquelle une rigidité de flexion de la couche de protection est supérieure à une rigidité de flexion moyenne de la première couche d'électrode (110), du séparateur (130) et de la seconde couche d'électrode (120).
